# EUROPÄISCHE PATENTSCHRIFT

(11) **EP 1 563 928 B1**
(45) Veröffentlichungstag und Bekanntmachung des Hinweises auf die Patenterteilung: **26.02.2014**
(21) Anmeldenummer: 05004567.3
(22) Anmeldetag: 23.09.2001
(51) Int. Cl.: B22C 9/04, B29C 41/34, B29C 67/00, B22F 3/105, B22F 3/00

(54) **Vorrichtung zum schichtweisen Aufbau von Modellen**
Apparatus for a stratified construction of models
Dispositif pour la construction stratifiée de modèles

(30) Priorität: 26.09.2000 DE 10047614
(43) Veröffentlichungstag der Anmeldung: 17.08.2005
(62) Teilanmeldung aus: 01985682.2
(73) Patentinhaber: Voxeljet AG, 86316 Friedberg (DE)
(72) Erfinder: Ederer, Ingo, 82269 Geltendorf (DE); Höchsmann, Rainer, 86682 Genderkingen (DE); Graf, Bernhard, 86911 Diessen am Ammersee (DE); Kudernatsch, Alexander, 86163 Augsburg (DE)
(74) Vertreter: Helbig, Christian

(56) Entgegenhaltungen:
- WO-A-97/10067
- DE-A- 19 846 478
- DE-A- 19 853 834
- US-A- 5 876 550

## Beschreibung

Die vorliegende Erfindung bezieht sich auf eine Vorrichtung zum schichtweisen Aufbau von Modellen, die einen Rahmen, eine höhenverfahrbare und auswechselbare Werkstückplattform sowie eine Materialzuführeinrichtung mit einem Beschichter aufweist, wobei der Beschichter zur Zuführung von Material aus einem Vorratsbehälter in einen Prozeßbereich über der Werkstückplattform dient und die Werkstückplattform in der Vorrichtung zumindest beim Aufbau eines Modells fixiert ist. Weiterhin bezieht sich die vorliegende Erfindung auf eine Verwendung einer solchen Vorrichtung.

Die Entwicklung von Bauteilen stellt heute neue Anforderungen an das Gießereiwesen. Dem steigenden Zeit- und Kostendruck läßt sich begegnen, indem das Dienstleistungsspektrum erweitert und eine Gießerei zum Full-Service-Anbieter wird, der die Produktentwicklung ganzheitlich übernimmt, und zwar von der Konstruktion der Gussteile bis zu ihrer Fertigung. Das erfordert jedoch unter anderem die Integration neuer Prozesse. Viele Gießereien haben sich deshalb zum Beispiel durch die Investition in verschiedene Rapid-Prototyping und Rapid-Tooling-Technologien innerhalb kürzester Zeit fest als Partner, vorrangig der Automobilindustrie, etabliert.

So ist es beispielsweise bekannt, mit einer Sinteranlage aus CAD-Daten auf direktem Weg Formen und Kerne aus harzumhülltem Formsand herzustellen. Dieses Verfahren heißt selektives Laser-Sintern. Dabei wird auf einer vorgesinterten Platte eine Schicht von harzumhülltem Formsand aufgetragen. Unter Einbringen von Energie mit einem schwenkbaren Laserstrahl werden genau die Sandflächen abgefahren, die in dieser Schicht ausgehärtet werden sollen. Der Laserstrahl erwärmt lokal die Sandschicht und löst den Reaktionsprozess des Harzbinders aus und versintert an diesen Stellen den Formsand. Ist eine Schicht fertiggestellt, senkt sich der Bautisch um etwa 0,2 mm und anschließend wird eine neue Sandschicht aufgetragen.

Nach Abschluß des Bauprozesses kann die Bauplattform mit dem Sandpaket zum Entformen aus der Maschine entnommen werden. Der lose, nicht thermisch beaufschlagte Sand wird entfernt und die entstandenen Formen bzw. Kerne entnommen. Die so hergestellten Formen können mit allen gängigen Gusswerkstoffen abgegossen werden. Die Gussteile entsprechen dabei durch die verwendeten Formstoffe in ihren Eigenschaften exakt den späteren Serienbauteilen.

Darüber hinaus ist auch ein Verfahren bekannt, bei dem eine Schicht eines schüttfähigen Partikelmaterials in einem Bereich auf einer Bauunterlage abgelagert wird. Darauf wird vollflächig ein Bindermaterial aufgetragen. Wiederum darauf wird ein das Bindermaterial aushärtender Härter in Form flüssiger Tröpfchen mittels eines verfahrbaren Dosiergerätes auf die Schicht von Partikelmaterial und Bindermaterial in einem ausgewählten Teilbereich des Bereichs aufgetragen. Bindermaterial und Partikelmaterial bilden eine verfestigte Struktur, wo der Härter aufgetragen wird. Weitere Schichten werden jeweils durch Wiederholen der vorangehend genannten Schritte gebildet. Danach wird die verfestigte Struktur von nicht verfestigten Anteilen des Partikelmaterials getrennt.

Um nun solche aus dem Stand der Technik bekannten sogenannten Rapid-Prototyping-Verfahren durchzuführen, sind verschiedene Vorrichtungen bekannt.

So ist beispielsweise aus der DE 198 46 478 A1 eine Laser-Sinter-Maschine mit einem in einem Maschinengehäuse untergebrachten Sinterbauraum bekannt, bei der im Bauraum eine Ausgangsoptik eines Sinterlasers sowie darunter eine höhenverfahrbare Werkstückplattform angeordnet sind. Weiterhin ist eine Materialzuführungseinrichtung mit einem Beschichter vorgesehen, der zur Zuführung von pulverartigem Sintermaterial aus einem Vorratsbehälter in dem Prozeßbereich über der Werkstückplattform dient. In den Sinterbauraum ist ein einen Begrenzungsrahmen bildender Wechselbehälter einsetzbar, in dem die Werkstückplattform als Behälterboden integriert ist und in den eine Trägervorrichtung, wie ein Scherenheber oder Tragarme, eingreift, auf der sich die Werkstückplattform beim Betrieb der Lasermaschine abstützt.

Der Wechselbehälter weist in seinem oberen Bereich auch Halte- oder Einhängeelemente, beispielsweise für einen Kran, auf, mit denen ein Austauschen des Wechselbehälters nach dem Fertigstellen des Modells durchgeführt werden kann.

Daneben wird in diesem Dokument auch beschrieben, den Wechselbehälter wie eine Schublade in den Prozeßraum einzuschieben, wozu Führungen im Bereich der Seitenwandungen des Prozeßraumes vorgesehen sind.

Weiterhin sind Vorrichtungen bekannt, bei denen der Wechselbehälter oder die Werkstückplattform mit Gabelstaplern oder Hubwägen in eine entsprechende Vorrichtung eingebracht werden können.

Bei allen aus dem Stand der Technik und der Praxis bekannten Vorrichtungen hat es sich jedoch als nachteilig erwiesen, dass das Be- und Entladen der Werkstückplattformen oder Wechselbehälter relativ zeitintensiv und platzaufwendig ist.

US-A-5,876,550 zeigt einen weiteren Stand der Technik.

Es ist daher Aufgabe der vorliegenden Erfindung, eine Vorrichtung zum schichtweisen Aufbau von Modellen bereitzustellen, die einen möglichst geringen Platzbedarf hat und mit der es möglich wird, den Zeitaufwand weiter zu minimieren.

Erfindungsgemäß wird diese Aufgabe bei einer Vorrichtung schichtweisen Aufbau von Modellen der eingangs genannten Art gemäß Anspruch 1 gelöst.

Dadurch, dass die Werkstückplattform nun einerseits in die Vorrichtung beladen werden kann und andererseits entladen werden kann, kann die Zeit zwischen zwei Aufbauprozessen von Modellen minimiert werden, da während der Zeit, in der die eine Werkstückplattform entladen wird, bereits die nächste Werkstückplattform in die Vorrichtung geladen werden kann.

Weiterhin kann der Platzbedarf einer solchen Vorrichtung sehr gering gehalten werden, da keinerlei zusätzliche Bauteile nötig werden. Auch muß kein Freiraum, beispielsweise nach oben vorgesehen werden, um ein Be- und Entladen von oben zu ermöglichen.

Unter dem Begriff Rahmen ist hierbei irgendeine äußere, der Vorrichtung einen Halt gebende Begrenzung zu verstehen, die auch zur Aufnahme von Bauteilen dient. Dadurch wird jedoch nicht ausgeschlossen, dass die Vorrichtung im wesentlichen geschlossen sein kann oder noch zusätzlich ein geschlossenes Gehäuse aufweist.

Weist die Vorrichtung jedoch zur Stabilisierung im wesentlichen nur einen offenen Rahmen auf, also eine Art Gerüst, so kann dieses beispielsweise sehr einfach an verschiedene Werkstückplattformgrößen angepaßt werden. Daneben ermöglicht ein Rahmen auch eine gute Zugänglichkeit.

Das Ein- und Herausführen der Werkstückplattform kann über alle möglichen Fördermittel geschehen. So könnten beispielsweise durch die Vorrichtung hindurchlaufende Förderbänder angeordnet sein. Bevorzugt ist zum Ein- und Herausführen der Werkstückplattform aber mindestens eine Rollenbahn vorgesehen. Bei Verwendung einer derartigen Rollenbahn sind keinerlei mobile Fördereinrichtungen, wie Gabelstapler oder Hubwägen, erforderlich. Die Rollenbahn sollte dabei bevorzugt durch die Vorrichtung hindurch, im wesentlichen geradlinig, verlaufen.

Grundsätzlich könnte die Werkstückplattform zwar jede erdenkliche Form aufweisen. Jedoch kann sie besonders leicht hergestellt und in der erfindungsgemäßen Vorrichtung justiert werden, wenn sie in Draufsicht einen im wesentlichen rechteckigen oder quadratischen Querschnitt aufweist. Weist die Werkstückplattform in Draufsicht einen im wesentlichen rechteckigen Querschnitt auf, so erfolgt das Ein- und Herausführen der Werkstückplattform vorzugsweise in einer Richtung mit einer kurzen Seite nach vorne, also im wesentlichen parallel zu den langen Seiten der Werkstückplattform.

Wird die Höhenverstellung der Werkstückplattform über mindestens eine seitliche Linearführung am Rahmen erreicht, so sind keinerlei Führungselemente unter der Werkstückplattform notwendig. Die Führung läuft seitlich von der Werkstückplattform, vorzugsweise dabei an den Seiten, die im wesentlichen parallel zur Einfahrtrichtung liegen. Bei einer derartigen Ausgestaltung wird die Bauhöhe der Vorrichtung allein durch die Werkstückplattform und die Höhe des aufzubauenden Modelles bestimmt und nicht durch Führungen zum Heben der Werkstückplattform unterhalb dieser, die eine sehr viel größere Bauhöhe bedingen.

Auch das Be- und Entladen der Werkstückplatte ist sehr einfach, da nicht mittels Zusatzgeräten eine genaue Positionierung auf den Führungen notwendig ist und das Fördern in die Vorrichtung begrenzt ist.

Dadurch, dass die Vorrichtung sehr kompakt gebaut werden kann, wird auch eine viel steifere Bauweise bedingt und die Vorrichtung ist dadurch sehr stabil.

Ein Antrieb der Höhenverstellung kann auf viele verschiedene, dem Fachmann bekannte Art und Weisen erfolgen. So wäre es denkbar, dass beispielsweise zwei seitliche zur Höhenverstellung der Werkstückplattform dienende Spindeln mit einem Motor angetrieben werden, wobei der Motor vorzugsweise eine Zahnriemen-Kopplung antriebt. Auch könnte die Kopplung durch ein Stirnradgetriebe und Wellen erfolgen.

Darüberhinaus ist es ebenso denkbar, dass die Höhenverstellung über mindestens zwei, vorzugsweise seitlich angeordnete Getriebemotoren erfolgen. Bei einer derartigen Anordnung stören sie beim Be- und Entladen nicht.

Die beiden Motoren sind dabei gemäß einer bevorzugten Ausführungsform der Erfindung über eine Koppelung miteinander verbunden. Die Koppelung kann dabei beispielsweise mechanisch mit Hilfe einer Königswelle erfolgen. Ebenso ist es auch denkbar, die Getriebemotoren über eine elektronische Koppelung im Master/Slave-Betrieb zu verbinden. Eine solche Koppelung bezeichnet ein Prinzip der Arbeitsteilung zwischen voneinander abhängigen Systemen, wobei der "Master" (ein erster Motor) übergeordnete Aufgaben übernimmt und die Koordination, während der "Slave" (ein zweiter Motor) einzelne Teilaufgaben übernimmt.

Die Getriebemotoren sind vorzugsweise derart in der Vorrichtung integriert, dass sie eine Kugelumlaufspindel antreiben, die ihrerseits wiederum über eine Spindelmutter an der Werkstückplattform angelenkte Hubplatten antreiben.

Sehr häufig hat es sich als vorteilhaft erwiesen, wenn die Werkstückplattform in einem Wechselbehälter eingesetzt wird und dieser als ganzes in die Vorrichtung ein- und herausführbar ist.

Weist die Werkstückplattform bzw. der Wechselbehälter eine im wesentlichen rechteckige Form in Draufsicht auf, so hat es sich gezeigt, dass möglichst viel Nebenzeiten eingespart werden können, wenn der Beschichtungsprozeß mit dem Beschichter über die kurze Werkstückplattformseite ausgeführt wird. Auch eine derartige Anordnung führt zu einer deutliche Zeitersparnis.

Es kann jedoch sein, dass zumindest ab einer bestimmten Länge des Beschichters dieser, je nach Ausführung, einen merklichen Durchhang aufweist, der im Beschichtungsprozeß nicht mehr toleriert werden kann. Ein solcher Durchhang kann durch eine einstellbare Beschichterkante ausgeglichen werden. Diese Beschichterkante ist vorzugsweise derart ausgebildet, dass sie eine geschliffene Stahlleiste aufweist, die in regelmäßigen Abständen durch Einstellschrauben justiert werden kann.

Zusätzlich kann durch diese Einstellschrauben auch die Neigung der Stahlleiste eingestellt werden.

Die Beschichtung erfolgt vorzugsweise über einen sogenannten Spaltbeschichter, der zwei Kanten aufweist. Dabei dient eine Kante zur Einstellung der Schichthöhe des jeweiligen Materials, wie beispielsweise des Formsandes und die zweite Kante definiert die Spaltbreite des Beschichters.

Daneben könnte die Beschichtung aber auch durch einen Walzenbeschichter vorgenommen werden. Dabei erfolgt das Auftragen des Materiales durch eine Walze. Diese dreht sich gegenläufig zur Beschichtungsrichtung und wird über das Baufeld bewegt, wobeisich eine Materialmenge in dünner Schicht ausbreitet..

Insbesondere dann, wenn es sich bei der Vorrichtung um eine Lasersintervorrichtung handelt, ist im oberen Bereich des Rahmens eine Ausgangsoptik eines Sinterlasers vorgesehen.

Daneben könnte es jedoch ebenso sein, dass im oberen Bereich des Rahmens ein Dosiersystem zum Zerstäuben von Flüssigkeiten und ein Drop-on-Demand-System vorgesehen sind, wodurch mit einer Art Tintenstrahltechnologie ein Modellaufbau erfolgen kann.

Insbesondere vorteilhaft hat sich die erfindungsgemäße Vorrichtung zur Verwendung bei einem Lasersinterverfahren oder einem Verfahren zum Aufbau von Gussmodellen aus Formsand, Gießereiharzen und entsprechenden Härtern erwiesen.

Eine bevorzugte Ausführungsform der Erfindung wird nachfolgend unter Bezugnahme auf die Zeichnung näher beschrieben. In der Zeichnung zeigt dabei:
Figur 1 eine dreidimensionale Darstellung einer erfindungsgemäßen Vorrichtung mit einem eingesetzten Wechselbehälter gemäß einer bevorzugten Ausführungsform;

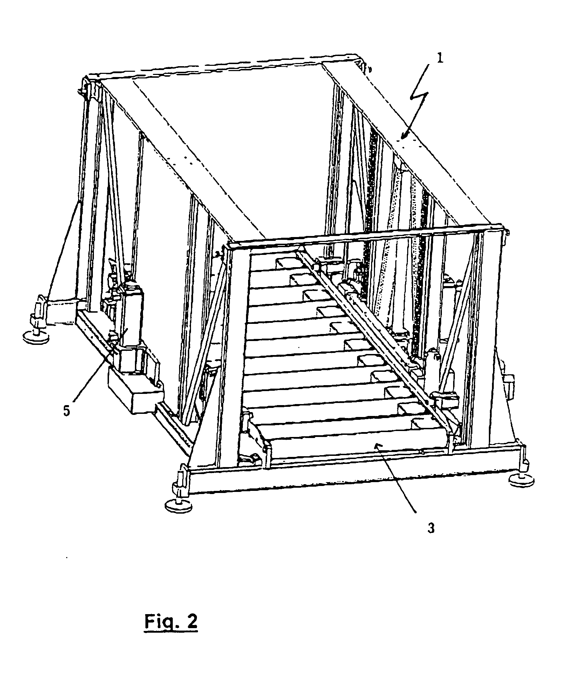

Figur 2 eine dreidimensionale Darstellung der Vorrichtung von Figur 1 ohne eingesetzten Wechselbehälter; und

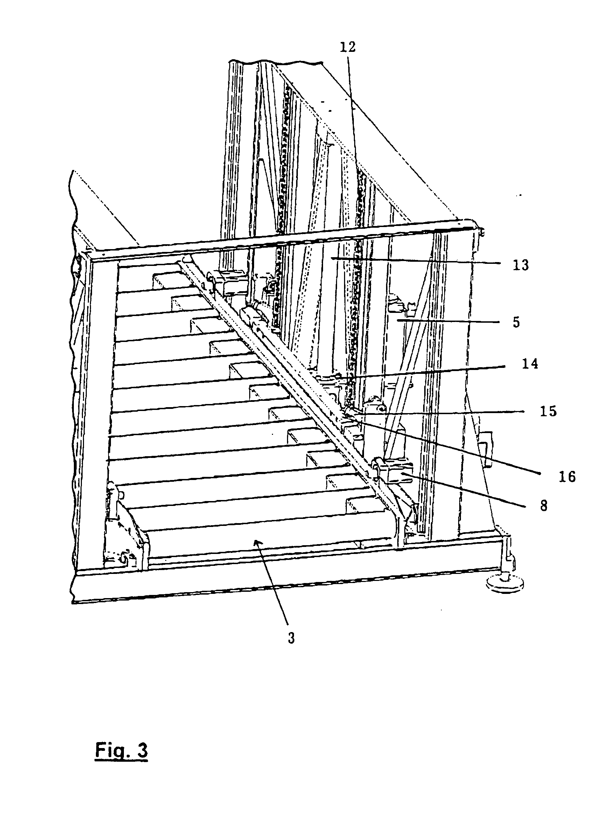

Figur 3 eine Detailansicht eines Ausschnittes der Darstellung von Figur 2.

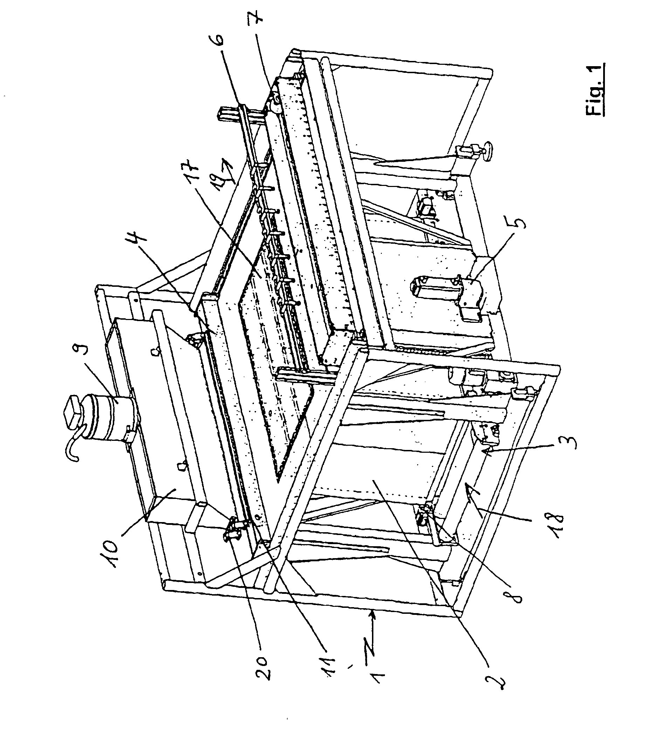

In der Figur 1 ist eine erfindungsgemäße Vorrichtung zum Aufbau von Modellen dargestellt, wobei hier beispielhaft die Vorrichtung für ein Verfahren zum schichtweisen Aufbau von Gussmodellen aus Formsand, Gießereiharzen und Härtern eingesetzt werden soll.

Eine entsprechend anders ausgestattete erfindungsgemäße Vorrichtung wäre jedoch ebenso für andere Verfahren, wie beispielsweise einem selektiven Laser-Sinter-Verfahren, einsetzbar.

Die dargestellte Vorrichtung weist einen Rahmen 1 auf, der als eine Art Gerüst dient, an dem weitere Bauteile direkt oder indirekt angelenkt sind. In der Vorrichtung ist eine im wesentlichen in Z-Richtung höhenverfahrbare Werkstückplattform 17 eingesetzt, die wiederum in einem Wechselbehälter 2 eingesetzt ist. Werkstückplattform 17 und Wechselbehälter 2 weisen dabei in Draufsicht einen im wesentlichen rechteckigen Querschnitt auf.

Das Einführen der im Wechselbehälter 2 enthaltenen Werkstückplattform 17 in die Vorrichtung erfolgt gemäß der gezeigten Ausführungsform einerseits in Richtung des Pfeiles 18 und ein Herausführen andererseits der Vorrichtung in Richtung des Pfeiles 19. Es ist dabei selbstverständlich, dass hierzu entsprechende Öffnungen im Rahmen 1 vorgesehen sein müssen.

Um das Ein- und Herausführen des Wechselbehälters 2 zu erleichtern, ist auch eine Rollenbahn 3 vorgesehen, die hierbei geradlinig durch die Vorrichtung verläuft.

Die Beschickung der erfindungsgemäßen Vorrichtung gemäß der gezeigten Ausführungsform erfolgt über die Rollenbahn 3. Dies hat den Vorteil, dass die Vorrichtung beim Kunden Platz sparend in ein Rollenbahnsystem integriert werden kann. So sind vor Ort keine mobilen Fördereinrichtungen, wie Gabelstapler, Kräne oder Hubwägen, erforderlich.

Dadurch, dass die Vorrichtung beidseitig be- und entladen werden kann und durch den Einsatz mehrerer Werkstückplattformen 17 und Wechselbehälter 2 kann die Zeit zwischen zwei Bauprozessen minimiert werden, da beim Entladen des einen Wechselbehälters 2 direkt der nächste von der anderen Seite her beladen werden kann.

Nach der seitlichen Einfahrt des die Werkstückplattform 17 enthaltenden Wechselbehälters 2 mit einer kurzen Seite des Wechselbehälters 2 bzw. der Werkstückplattform 17 nach vorne in Einfahrrichtung 18 in die Vorrichtung wird der Wechselbehälter 2 über pneumatisch betätigte Bolzen 8 in Einfahrrichtung fixiert.

Weiterhin fahren seitlich, an den Längsseiten des Wechselbehälters 2 vier Klauen 15, an jeder Seite zwei, in den Wechselbehälter 2 ein, wobei die Klauen 15 unter die Werkstückplattform 17 eingreifen.

Die Werkstückplattform 17 wird dabei an den Klauen 15 durch kegelige Auflagen festgelegt. Hierzu weist die Werkstückplattform 17 entsprechende Ausnehmungen auf und die Klauen 15 greifen darin ein. Dabei sind vorzugsweise zwei kegelig ausgebildete Klauen 15 vorgesehen, die diagonal zueinander angeordnet sind, damit die Werkstückplattform 17 in beiden Richtungen in die Vorrichtung eingesetzt werden kann. Die zwei kegeligen Auflagen der Klauen 15 sind derart ausgestaltet, dass sie die genaue Lage der Werkstückplattform bestimmen. Die beiden anderen Klauen 15 sind dagegen flach ausgebildet, damit sich die Werkstückplattform 17 ausrichten kann. Derart ist die Werkstückplattform 17 in der Ebene genau definiert gelagert.

Die Höhenverstellung der Werkstückplattform 17 erfolgt über mindestens eine seitliche Linearführung 12 am Rahmen 1. Daher sind keinerlei Führungselemente unter der Werkstückplattform 17 notwendig. Die Linearführungen 12 laufen seitlich der Werkstückplattform 17,und zwar an den Seiten, die im wesentlichen parallel zur Einfahrtrichtung 18 liegen.

Die Verschiebung der Werkstückplattform 17 wird über zwei jeweils seitlich am Rahmen 1 angeordnete Getriebemotoren 5 erzeugt, die über eine elektronische Koppelung im Master/Slave-Betrieb arbeiten und je eine Kugelumlaufspindel 13 antreiben, die wiederum über eine Spindelmutter 14 zwei Hubplatten 16 antreibt. Die je an einer Seite angeordneten beiden Klauen 15 sind dabei an einer Hubplatte 16 zur Höhenverstellung befestigt.

Nach dem Festlegen der Werkstückplattform 17 in der Vorrichtung wird diese zu Beginn des Bauprozesses in die oberste Position gefahren und ist für den Start des Aufbaurozesses bereit.

In der Vorrichtung oben ist eine Materialzuführeinrichtung mit einem Beschichter 4 angebracht. Der Beschichter 4 dient zur Zuführung von Material, hier Formsand, aus einem Vorratsbehälter 10, der fest mit dem Rahmen 3 verbunden ist, in einen Prozeßbereich über der Werkstückplattform 17. Seinerseits wird der Vorratsbehälter 10 über ein Vakuumfördersystem 9 mit dem Formsand versorgt. Der Formsand wird mittels des Beschichters 4 in einer definierten Schichtdicke auf die Werkstückplattform 17 aufgebracht.

Der Befüllvorgang des Beschichters 4 erfolgt über eine Rüttelschiene 11, die über einen Pneumatikrüttler in Schwingung versetzt wird. Die Schwingrinne 11 ist über Festkörpergelenke 20 am Vorratsbehälter 10 befestigt. Durch eine Vibration der Schwingrinne 11 wird Sand in den entsprechend positionierten Beschichter 4 gefördert.

Um möglichst gleichmäßig über die komplette Länge der Schwingrinne 11 den Formsand fördern zu können, ist ein gleichmäßiges Sandniveau im Vorratsbehälter 10 erforderlich. Unterschiedliche Formsandniveaus haben nämlich einen unterschiedlichen Druck auf den Dosierspalt an der Schwingrinne 11 zur Folge und damit auch unterschiedliche Dosiervolumina. Da die Befüllung des Vorratsbehälters 10 durch das Vakuumfördersystem 9 allerdings nur punktuell in etwa mittig erfolgt, muß durch eine entsprechende Einrichtung das Niveau ausgeglichen werden. Dies erfolgt mit zwei Förderschnecken, die aus der Mitte heraus in gegensätzlicher Richtung fördern. Derart kann eine ausreichende Nivellierung des Formsandes mit wenig Aufwand erfolgen.

Wie der Figur 1 zu entnehmen ist, wird der Beschichtungsprozeß mittels des Beschichters 4 über die kurze Baufeldseite der in Draufsicht einen rechteckigen Querschnitt aufweisenden Werkstückplattform 17 ausgeführt. Dadurch kann eine deutliche Zeitersparnis erreicht werden, da der zurückzulegende Weg viel kürzer ist.

Da jedoch der Beschichter 4 über seine Länge einen merklichen Durchhang aufweisen kann, ist gemäß der gezeigten bevorzugten Ausführungsform der Beschichter 4 mit einer einstellbaren Beschichterkante versehen, mit der ein Durchhang ausgeglichen werden kann.

Mittels eines angepassten Dosiersystems zum Zerstäuben von Flüssigkeiten 6 wird danach Gießereiharz in einem bestimmten, erwünschten Volumenverhältnis auf den Formsand aufgetragen.

Anschließend daran werden auszuhärtende Flächen des Sand-Harz-Gemisches mit einem geeigneten Härter verklebt, der über ein sogenanntes "drop-on demand-system" 7 nach Art eines Tintenstrahl-Druckkopfes selektiv aufgebracht wird.

Danach wird die Werkstückplattform 17 abgesenkt und der Vorgang solange wiederholt, bis das Gussmodell erstellt ist. Woran sich das Entladen des Wechselbehälters 2 andererseits aus der Vorrichtung heraus anschließt, während gleichzeitig ein neuer Wechselbahälter beladen wird.

### Bezugszeichenliste

- 1: Rahmen
- 2: Wechselbehälter
- 3: Rollenbahn
- 4: Beschichter
- 5: Getriebemotor
- 6: Dosiersystem zum Zerstäuben von Flüssigkeiten
- 7: drop-on-demand-system
- 8: Bolzen
- 9: Vakuumfördersystem
- 10: Vorratsbehälter
- 11: Schwingrinne
- 12: Linearführung
- 13: Kugelumlaufspindel
- 14: Spindelmutter
- 15: Klaue
- 16: Hubplatte
- 17: Werkstückplattform
- 18: Einfahrrichtung
- 19: Herausfahrrichtung
- 20: Festkörpergelenk

## Patentansprüche

1. Vorrichtung zum schichtweisen Aufbau von Modellen, die einen Rahmen, eine höhenvezfahrbare Werkstückplattform (17) sowie eine Materialzuführeinrichtung mit einem Beschichter (4) aufweist, wobei der Beschichter (4) zur Zuführung von Material aus einem Vorratsbehälter (10) in einen Prozeßbereich über der Werkstückplattform (17) dient und die Werkstückplattform (17) in der Vorrichtung zumindest beim Aufbau eines Modells fixiert ist,
**dadurch gekennzeichnet,**
**dass** die Werkstückplattform (17) in Draufsicht eine im wesentlichen rechteckige Form aufweist und der Beschichtor (4) über eine kurzere Seite der Werkstückplattform (17) verfahrbar angeordnet ist,
sich im wesentlichen über eine lange Seite der Werkstückplatform (17) erstreckt und mit einer Beschichterkante die zur Vermeidung von Durchhang einstellbar ist, versehen ist.

2. Vorrichtung nach Ansprüche 1,
**dadurch gekennzeichnet,**
**dass** im oberen Bereich des Rahmens ein Drop-on-Demand-System (7) vorgesehen ist.

3. Vorrichtung nach Anspruch 1 oder 2, **dadurch gekennzeichnet,**
**dass** der Vorratsbehälter (10) oberhalb des Beschichters (4) angeordnet ist.

4. Vorrichtung nach Anspruch 3,
**dadurch gekennzeichnet,**
**dass** am Vorratsbehälter (10) eine Vorrichtung (11) zum Dosieren von Partikelmaterial angebracht ist.

5. Vorrichtung nach einem der vorhergehenden Ansprüche,
**dadurch gekennzeichnet ,**
**dass** eine Höhenverstellung der Werkstückplattform (17) über mindestens eine seitliche Linearführung (12) an einem Rahmen (1) erfolgt.

6. Vorrichtung nach Anspruch 5,
**dadurch gekennzeichnet ,**
**dass** ein Antrieb der Höhenverstellung über mindestens einen Motor (5), insbesondere Getriebemotor, erfolgt.

7. Vorrichtung nach Anspruch 6,
**dadurch gekennzeichnet ,**
**dass** der Getriebemotor (5) eine Kugelumlaufspindel (13) antreibt, die eine über eine Spindelmutter (14) an der Werkstückplattform (17) angelenkte Hubplatte (16) antreibt.

8. Vorrichtung nach einem der Ansprüche 5-7,
**dadurch gekennzeichnet ,**
**dass** mindestens eine Linearführung (12) am Rahmen (1) angebracht sind.

9. Vorrichtung nach Anspruch 7 und 8,
**dadurch gekennzeichnet,**
**dass** bei Verwendung von zwei Getriebemotoren diese miteinander über eine Koppelung verbunden sind.

10. Vorrichtung nach Anspruch 9,
**dadurch gekennzeichnet,**
**dass** die Koppelung mechanisch und/oder elektrisch erfolgt.

11. Vorrichtung nach einem der vorhergehenden Ansprüche,
**dadurch gekennzeichnet ,**
**dass** zum Ein- und Herausführen der Werkstückplattform (17) ein Fördermittel (3) vorgesehen ist.

12. Vorrichtung nach Anspruch 11,
**dadurch gekennzeichnet,**
**dass** die Werkstückplattform (17) über das Fördermittel (3) sowohl in einer, als auch in einer anderen Richtung aus der Vorrichtung bewegt werden kann.

13. Vorrichtung nach einem der vorhergehenden Ansprüche,
**dadurch gekennzeichnet ,**
**dass** die Werkstückplattform (17) in einem Wechselbehälter (2) eingesetzt ist.

14. Vorrichtung nach Anspruch 5
**dadurch gekennzeichnet,**
**dass** im oberen Bereich des Rahmens eine Ausgangsoptik eines Sinterlasers vorgesehen ist.

15. Verwendung der Vorrichtung nach einem der vorhergehenden Ansprüche 1 bis 14 bei einem Lasersinterverfahren.

16. Verwendung der Vorrichtung nach einem der vorhergehenden Ansprüche 1 bis 14 bei einem Verfahren zum schichtweisen Aufbau von Gussmodellen aus Formsand, Gießereiharzen und Härtern.

17. Verwendung der Vorrichtung nach einem der vorhergehenden Ansprüche 1 bis 14 bei einem Verfahren zum schichtweisen Aufbau von Modellen aus Partikelmaterial und Bindern.

## Claims

1. A device for the layered structuring of models, which comprises a frame, a workpiece platform (17) which is adjustable in height, as well as a material supply means comprising a coater (4), said coater (4) serving to supply material from a storage container (10) to a process area above the workpiece platform (17) and said workpiece platform (17) being fixed in said device at least during the structuring of a model,
**characterised in that**
the workpiece platform (17), when viewed from above, has a substantially rectangular shape and the coater (4) is arranged to be displaceable over a shorter side of the workpiece platform (17), extends substantially over a long side of the workpiece platform (17) and is provided with a coater edge which can be adjusted to avoid slack.

2. The device according to claim 1, **characterised in that** a drop-on demand system (7) is provided in the upper part of the frame.

3. The device according to claim 1 or 2, **characterised in that** the storage container (10) is arranged above the coater (4).

4. The device according to claim 3, **characterised in that** a dosage device (11) for particulate material is attached to the storage container (10).

5. The device according to any one of the preceding claims, **characterised in that** height adjustment of the workpiece platform (17) is effected via at least one lateral linear guide (12) on a frame (1).

6. The device according to claim 5, **characterised in that** the height adjustment is driven via at least one motor (5), in particular a gear motor.

7. The device according to claim 6, **characterised in that** the gear motor (5) drives a ball screw (13) which drives a lifting plate (16) articulated to the workpiece platform (17) via a screw nut (14).

8. The device according to any one of claims 5 to 7, **characterised in that** at least one linear guide (12) is attached to the frame (1).

9. The device according to claims 7 and 8, **characterised in that**, where two gear motors are used, these are connected to each other by a coupling.

10. The device according to claim 9, **characterised in that** the coupling is effected mechanically and/or electrically.

11. The device according to any one of the preceding claims, **characterised in that** a conveying means (3) is provided for moving the workpiece platform (17) in and out.

12. The device according to claim 11, **characterised in that** the workpiece platform (17) can be moved out of the device by the conveying means (3) in one direction or another.

13. The device according to any one of the preceding claims, **characterised in that** the workpiece platform (17) is inserted in an interchangeable container (2).

14. The device according to claim 5, **characterised in that** output optics of a sintering laser are provided in the upper part of the frame.

15. Use of the device according to any one of claims 1 to 14 in a laser sintering process.

16. Use of the device according to any one of claims 1 to 14 in a method for the layered structuring of casting models from die sand, casting resins and curing agents.

17. Use of the device according to any one of claims 1 to 14 in a method for the layered structuring of models from particulate material and binding agents.

## Revendications

1. Dispositif destiné à constituer des modèles par couches, ledit dispositif comportant un cadre, une plateforme pour pièces (17) réglable en hauteur, ainsi qu'un appareil d'amenée de matériau comportant un enducteur (4), ledit enducteur (4) servant à amener du matériau d'un réservoir (10) à une zone de procédé située au-dessus de la plateforme pour pièces (17) et ladite plateforme pour pièces (17) étant fixée dans le dispositif au moins pendant la constitution d'un modèle,
**caractérisé en ce que**
la plateforme pour pièces (17), vue par dessus, présente une forme sensiblement rectangulaire et l'enducteur (4) est disposé de manière à être déplaçable sur une face plus courte de la plateforme pour pièces (17), s'étend sensiblement sur une face longue de la plateforme pour pièces (17) et présente un bord d'enducteur ajustable de manière à éviter un fléchissement.

2. Dispositif selon la revendication 1, **caractérisé en ce qu'**un système du type goutte à la demande (7) est prévu en partie supérieure dudit cadre.

3. Dispositif selon la revendication 1 ou 2, **caractérisé en ce que** ledit réservoir (10) est disposé au-dessus de l'enducteur (4).

4. Dispositif selon la revendication 3, **caractérisé en ce qu'**un dispositif (11) pour le dosage de matériau en particules est fixé au réservoir (10).

5. Dispositif selon l'une quelconque des revendications précédentes, **caractérisé en ce qu'**un réglage en hauteur de ladite plateforme pour pièces (17) s'effectue par au moins un guidage linéaire latérale (12) à un cadre (1).

6. Dispositif selon la revendication 5, **caractérisé en ce que** le réglage en hauteur est commandé par au moins un moteur (5), notamment un moto-réducteur.

7. Dispositif selon la revendication 6, **caractérisé en ce que** ledit moto-réducteur (5) commande une vis à billes (13) qui commande, par un écrou de vis (14), un plateau de levage (16) articulé à ladite plateforme pour pièces (17).

8. Dispositif selon l'une quelconque des revendications 5 à 7, **caractérisé en ce qu'**au moins un guidage linéaire (12) est fixé au cadre (1).

9. Dispositif selon les revendications 7 et 8, **caractérisé en ce que**, lors de l'utilisation de deux moto-réducteurs, ceux-ci sont reliés l'un à l'autre par accouplement.

10. Dispositif selon la revendication 9, **caractérisé en ce que** ledit accouplement s'effectue de manière mécanique et/ou électrique.

11. Dispositif selon l'une quelconque des revendications précédentes, **caractérisé en ce que** l'on prévoit un transporteur (3) pour introduire et sortir ladite plateforme pour pièces (17).

12. Dispositif selon la revendication 11, **caractérisé en ce que** ledit transporteur (3) permet de sortir ladite plateforme pour pièces (17) du dispositif dans une direction ou une autre.

13. Dispositif selon l'une quelconque des revendications précédentes, **caractérisé en ce que** ladite plateforme pour pièces (17) est insérée dans un conteneur interchangeable (2).

14. Dispositif selon la revendication 5, **caractérisé en ce qu'**une optique de sortie d'un laser de frittage est pourvue en partie supérieure du cadre.

15. Utilisation du dispositif selon l'une quelconque des revendications 1 à 14 dans un procédé de frittage laser.

16. Utilisation du dispositif selon l'une quelconque des revendications 1 à 14 dans un procédé destiné à constituer des modèles de fonderie par couches en sable de moulage, en résines de coulée et en durcisseurs.

17. Utilisation du dispositif selon l'une quelconque des revendications 1 à 14 dans un procédé destiné à constituer des modèles par couches en matériau en particules et en durcisseurs.
